(19) Europäisches Patentamt
European Patent Office
Office européen des brevets

(11) EP 2 927 277 A1

(12) **EUROPEAN PATENT APPLICATION**
published in accordance with Art. 153(4) EPC

(43) Date of publication:
**07.10.2015 Bulletin 2015/41**

(21) Application number: **13858424.8**

(22) Date of filing: **27.11.2013**

(51) Int Cl.:
***C08L 33/08*** *(2006.01)* ***C09D 1/00*** *(2006.01)*
***C09D 133/04*** *(2006.01)* ***H01G 4/12*** *(2006.01)*
***H01G 4/30*** *(2006.01)*

(86) International application number:
**PCT/JP2013/081950**

(87) International publication number:
**WO 2014/084273 (05.06.2014 Gazette 2014/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.11.2012 JP 2012262389**

(71) Applicant: **Soken Chemical & Engineering Co., Ltd.**
**Toshima-ku**
**Tokyo 171-8531 (JP)**

(72) Inventors:
- **MATSUMOTO, Hiroto**
  **Sayama-shi**
  **Saitama 350-1320 (JP)**
- **MIYAMOTO, Takeshi**
  **Sayama-shi**
  **Saitama 350-1320 (JP)**

(74) Representative: **de Bresser, Sara Jean**
**Dehns**
**St Bride's House**
**10 Salisbury Square**
**London EC4Y 8JD (GB)**

# (54) PASTE COMPOSITION, AND SINTERED BODY AND METHOD FOR PRODUCING SAME

(57) [Problem] To provide a paste composition which has appropriate viscosity and is excellent in both of coating property and calcining property, a production process for a calcined body using the paste composition, and a calcined body. [Solution] A paste composition characterized by comprising a (meth)acrylic (co)polymer containing 20 to 100% by mol of a constituent unit (A) represented by the following general formula (1) is provided. In the general formula (1), $R^1$ is a hydrogen atom or a methyl group, $R^2$ is a group having diameters of X<13.5 Å and Y>6. 15 Å (here, X represents a length in the long-side direction and Y represents a length in the short-side direction) and having a volume larger than 80 $Å^3$ and is a functional group having hydrogen bond property, a group having an alkoxy group or a group having an aryloxy group, and n is a number of 5 to 2000.

EP 2 927 277 A1

**Description**

Technical Field

The present invention relates to a paste composition, a calcined body and a production process for the calcined body.

Background Art

Paste compositions containing inorganic particles such as conductive powder and ceramic powder are used for obtaining sintered bodies of various shapes. For example, a conductive paste composition containing conductive powder is used for formation of a circuit, production of a condenser, etc. A ceramic paste composition containing ceramic powder or a glass paste composition containing glass powder is used for producing a dielectric layer of a plasma display panel (PDP) or a multi-layer ceramic condenser (MLCC), or used for a fluorescent display tube or the like. A paste composition containing ITO is used for a transparent electrode material for forming PDP, a liquid crystal display panel (LCD), a circuit of a solar panel drive unit, etc. In addition, a paste composition containing a fluorescent substance is used for an inorganic electroluminescent (EL) element, PDP, etc., and a paste composition containing silver is used for a solar cell, LED, etc. A demand for these inorganic particle-containing paste compositions has been rapidly increasing in recent years.

From such an inorganic particle-containing paste composition, a sintered body of a desired shape can be obtained by processing the composition into a given shape by a coating method using screen printing, die coating, doctor blade printing, roll coating, offset printing, gravure printing, flexographic printing, inkjet printing, dispenser printing or the like, a casting method for forming a sheet or another method and thereafter calcining the resulting product.

In the inorganic particle-containing paste composition used for producing a dielectric layer (e.g., MLCC), ethyl cellulose (EC) or poly (vinyl butyral) (PVB) is often used as a binder. It is known that a paste composition containing EC or PVB is generally good in coating property and dispersibility of inorganic particles but has poor calcining property. Particularly with downsizing of condensers in recent years, improvement in performance of paste compositions has been required.

Citation List

Patent Literature

Patent literature 1: Japanese Patent Laid-Open Publication No. 2012-129181

Summary of Invention

Technical Problem

The present invention provides a paste composition which has appropriate viscosity and is excellent in coating property and calcining property, a production process for a calcined body using the paste composition and a calcined body obtained by the production process.

Solution to Problem

The present inventors have found that a paste composition containing a (meth) acrylic (co) polymer having a functional group of a given size on the side chain has appropriate viscosity and has coating property and calcining property that are compatible with each other.

1. Apaste composition according to one embodiment of the present invention is characterized by comprising a (meth) acrylic (co) polymer containing 20 to 100% by mol of a constituent unit (A) represented by the following general formula (1):

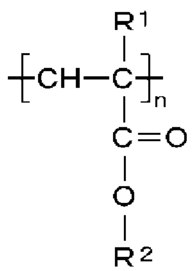

・・・(1)

wherein $R^1$ is a hydrogen atom or a methyl group, $R^2$ is a group having diameters of X<13.5 Å and Y>6.15 Å (here, X represents a length in the long-side direction and Y represents a length in the short-side direction) and having a volume larger than 80 $Å^3$ and is a functional group having hydrogen bond property, a group having an alkoxy group or a group having an aryloxy group, and n is a number of 5 to 2000.

In the present invention, a "functional group having hydrogen bond property" means a group having a property of forming a hydrogen bond. In the present invention, "(meth)acrylic" means "acrylic or methacrylic", and a "(co)polymer" means a polymer or a copolymer. Further, a "(meth)acrylic copolymer" means a copolymer in which at least one kind selected from (meth)acrylic acid, a salt of (meth)acrylic acid and a (meth)acrylic acid ester is contained in an amount of not less than 50% bymol as amonomeric unit in the copolymer.

2. In the paste composition as stated in the above 1, the (meth) acrylic (co) polymer can be a (co) polymer of a monomer component containing 20 to 100% by mol of a monomer (a) represented by the following general formula (2):

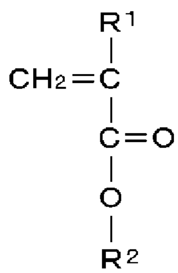

・・・(2)

wherein $R^1$ and $R^2$ have the same meanings as $R^1$ and $R^2$ in the general formula (1).

3. In the paste composition as stated in the above 1, the (meth)acrylic copolymer can further contain a constituent unit (B) represented by the following general formula (3):

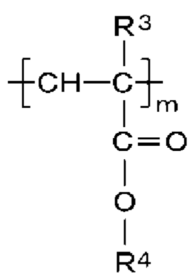

・・・(3)

wherein $R^3$ is a hydrogen atom or a methyl group, $R^4$ is a group having diameters of X<13.5 Å and Y>6.15 Å (here,

X represents a length in the long-side direction and Y represents a length in the short-side direction) and having a volume larger than 80 $Å^3$ and is a group having none of a functional group having hydrogen bond property, a group having an alkoxy group and an aryloxy group, and m is a number of 5 to 1500.

4. In the paste composition as stated in the above 2, the total amount of the monomer (a) and a monomer (b) represented by the following general formula (4) in the monomer component is 70 to 100% by mol,

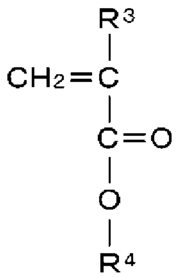

・・・ (4)

wherein $R^3$ and $R^4$ have the same meanings as $R^3$ and $R^4$ in the general formula (3).

5. In the paste composition as stated in any one of the above 1 to 4, the functional group having hydrogen bond property can be at least one group selected from a hydroxyl group, a carboxyl group, an amino group, an amide group, an acetoacetoxy group, an acid anhydride group, a sulfonic acid group, a phosphoric acid group, a thiol group and a heterocyclic group.

6. In the paste composition as stated in any one of the above 1 to 5, the SP value of the (meth)acrylic (co)polymer can be 7 to 10.

7. In the paste composition as stated in any one of the above 1 to 6, the weight-average molecular weight of the (meth)acrylic (co)polymer can be 1,000 to 200,000.

8. The paste composition as stated in any one of the above 1 to 7 can further comprise a solvent, and inorganic powder or a dispersing agent.

9. In the paste composition as stated in the above 8, the (meth) acrylic (co)polymer and the solvent can satisfy a relationship of the following formula (5):

$$|(\text{SP value of the (meth)acrylic (co)polymer}) - (\text{SP value of the solvent})| \leq 2 \qquad (5)$$

10. The paste composition as stated in any one of the above 1 to 9 can be used for producing a green sheet of a multi-layer ceramic condenser.

11. A production process for a calcined body according to another embodiment of the present invention comprises a step of applying the paste composition as stated in any one of the above 1 to 10 to a base, a step of drying the applied paste composition and a step of calcining the base including the dried paste composition.

12. A calcined body according to another embodiment of the present invention is obtained by the production process for a calcined body as stated in the above 11.

## Advantageous Effects of Invention

Since the paste composition comprises a (meth)acrylic (co)polymer containing 20 to 100% by mol of a constituent unit (A) represented by the above general formula (1), it has appropriate viscosity and is excellent in both of coating property and calcining property.

## Description of Embodiments

The present invention is described in detail hereinafter referring to a drawing. In the present invention, "part(s)" means "part(s) by mass", and "%" means "% by mass", unless otherwise noted.

1. Paste composition

The paste composition according to one embodiment of the present invention comprises a (meth) acrylic (co) polymer containing 20 to 100% by mol of a constituent unit (A) represented by the following general formula (1).

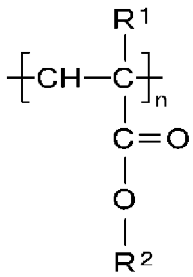

・・・ (1)

In the above formula, $R^1$ is a hydrogen atom or a methyl group, $R^2$ is group having diameters of X<13.5Å and Y>6.15Å (here, Represents a length in the long-side direction and Y represents a length in the short-side direction) and having a volume larger than 80 $Å^3$ and is a functional group having hydrogen bond property, a group having an alkoxy group or a group having an aryloxy group, and n is a number of 5 to 2000.

1.1. (Meth)acrylic copolymer

1.1.1 Constituent unit (A)

In the paste composition according to the present embodiment, the (meth) acrylic (co) polymer contains 20 to 100% by mol (preferably 30 to 90% by mol, more preferably 40 to 80% by mol) of a constituent unit (A) represented by the above general formula (1). In the general formula (1), $R^2$ is a group having large steric hindrance because it has diameters of X<13.5 Å and Y>6.15 Å and has a volume larger than 80 $Å^3$. Here, X, Y and a volume of $R^2$ are values calculated by the EF method of MOPAC PM3. The "length in the long-side direction" as X means a distance from a carbon atom in $R^2$ in the formula (1), said carbon atom being bonded to an oxygen atom that is adjacent and bonded to $R^2$, to an atom in $R^2$, said atom being at the position farthest from the carbon atom, and the "length in the short-side direction" as Y means a length of the longest portion in the direction intersecting the long-side direction.

In the paste composition according to the present embodiment, $R^2$ in the general formula (1) has diameters of X<13.5 Å and Y>6.15 Å and has a volume of 80 $Å^3$, and therefore, in the (meth)acrylic (co)polymer, steric hindrance between molecules attributable to the bulkiness of a group represented by $R^2$ in the general formula (1) occurs, so that intramolecular or intermolecular entanglement in the (meth)acrylic (co)polymer can be reduced. As a result, coating property of the paste composition according to the present embodiment is enhanced. Moreover, the (meth)acrylic (co)polymer is excellent in calcining property (when the (meth) acrylic (co) polymer is calcined, the amount of residual carbon is small).

Examples of groups obtained by removing a functional group having hydrogen bond property, a group having an alkoxy group or a group having an aryloxy group from $R^2$ in the general formula (1) include branched alkyl groups, such as isoalkyl group, sec-alkyl group and tert-alkyl group; and groups containing cyclic groups (e.g., cyclic hydrocarbon, heterocyclic compound), such as cyclohexyl group, benzyl group, dicyclopentanyl group, isobornyl group, dicyclopentanyl group, adamantyl group, tetrahydrofurfuryl group, γ-butyrolactone group, piperidyl group, and derivatives of these groups. Of these, preferable are branched alkyl groups of 4 to 6 carbon atoms and groups containing cyclic groups of 5 to 10 carbon atoms.

From the viewpoint that the intramolecular or intermolecular entanglement in the (meth)acrylic (co) polymer can be reduced, $R^2$ in the general formula (1) is preferably a group having diameters of X<8 Å and Y>6.15 Å and having a volume larger than 85 $Å^3$.

In the paste composition according to the present embodiment, the (meth)acrylic (co)polymer can be a (co)polymer of a monomer component containing 20 to 100% by mol (preferably 30 to 90% by mol, more preferably 40 to 80% by mol) of a monomer (a) represented by the following general formula (2), and if necessary, a monomer (b) and a monomer (c) (described later).

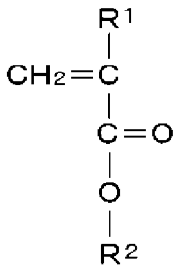

・・・(2)

In the above formula, $R^1$ and $R^2$ have the same meanings as $R^1$ and $R^2$ in the general formula (1).

1.1.2. Functional group having hydrogen bond property, group having alkoxy group, group having aryloxy group

The functional group having hydrogen bond property, which is contained in the (meth)acrylic (co)polymer, can contribute to development of appropriate viscosity by virtue of formation of a hydrogen bond. The functional group having hydrogen bond property, which is contained in the (meth)acrylic (co)polymer, can be, for example, at least one group selected from a hydroxyl group, a carboxyl group, an amino group, an amide group, an acetoacetoxy group, an acid anhydride group, a sulfonic acid group, a phosphoric acid group, a thiol group and a heterocyclic group. Of these functional groups, preferable are hydroxyl group, carboxyl group, amino group, acid anhydride group, oxirane group and oxorane group, and more preferable are hydroxyl group, amino group, acid anhydride group and oxirane group.

Examples of alkoxy groups contained in the groups having an alkoxy group include straight-chain alkoxy groups, such as methoxy group, ethoxy group, n-propoxy group and n-butoxy group, branched alkyl groups, such as isopropoxy group and ethylhexyloxy group, and cyclic alkoxy groups, such as cyclohexyloxy group. Of these, preferable are branched alkoxy groups and cyclic alkoxy groups. Examples of aryloxy groups contained in the groups having an aryloxy group include a phenoxy group and a naphthoxy group, which may be substituted.

Of the functional group having hydrogen bond property, the group having an alkoxy group and the group having an aryloxy group, the functional group having hydrogen bond property is preferable.

Examples of the monomers (a) used for producing the (meth) acrylic (co) polymer wherein the group represented by $R^2$ contains a functional group having hydrogen bond property, a group having an alkoxy group or a group having an aryloxy group include (meth) acrylic acid esters, such as 2-hydroxyisobutyl (meth)acrylate, 2-hydroxyisopropyl (meth)acrylate, 2,2,4-trimethyl-3-hydroxypentyl (meth)acrylate, cyclohexanedimethanol mono(meth)acrylate, 2-(meth)acryloyloxyethylhexahydrophthalic acid, 3,4-epoxycyclohexylmethyl (meth)acrylate, pentamethylpiperidyl (meth)acrylate, tetrametahylpiperidyl (meth)acrylate, tetrahydrofurfuryl (meth)acrylate, γ-butyrolactone (meth)acrylate, 2,2-dimethyl-3-hydroxypropyl (meth)acrylate, hydroxycyclohexyl (meth)acrylate, 4-(meth)acryloyloxy-2,2,6,6-tetramethylpiperidine, (meth)acrylic acid [(3,4-epoxycyclohexan)-1-yl]methyl, and a reaction product of dicyclopentenyl (meth)acrylate with maleic anhydride. These monomers (a) can be used singly or as a mixture of two or more kinds.

1.1.3. Constituent unit (B)

The (meth) acrylic (co) polymer can further contain a constituent unit (B) represented by the following general formula (3).

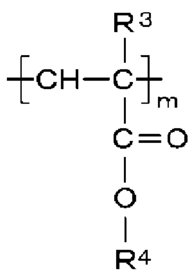

・・・(3)

In the above formula, $R^3$ is a hydrogen atom or a methyl group, $R^4$ is group having diameters of X<13.5Å and Y>6.15Å (here, X represents a length in the long-side direction and Y represents a length in the short-side direction) and having a volume larger than 80 $Å^3$ and is a group having none of a functional group having hydrogen bondproperty, a group having an alkoxy group and an aryloxy group, and m is a number of 5 to 1500.

The total amount of the constituent unit (A) and the constituent unit (B) in the (meth)acrylic (co)polymer is 70 to 100% by mol, preferably 80 to 90% by mol.

In the general formula (3), X, Y and a volume of $R^4$ are values calculated by the EF method of MOPAC PM3, similarly to those of $R^2$ in the aforesaid general formula (1). Here, the "length in the long-side direction" as X means a distance from a carbon atom in $R^4$ in the above formula (3), said carbon atom being bonded to an oxygen atom that is adjacent and bonded to $R^4$, to an atom in $R^4$, said atom being at the position farthest from the carbon atom, and the "length in the short-side direction" as Y means a length of the longest portion in the direction intersecting the long-side direction.

When the (meth) acrylic (co) polymer is produced using the monomer (a) and the later-describedmonomer (b), the total amount of the monomer (a) and the monomer (b) is preferably 70 to 100% by mol, more preferably 80 to 90% by mol, of the total amount of the monomer component. Although the molar ratio between the monomer (a) and the monomer (b) is arbitrarily determined, the ratio (monomer (a):monomer (b)) is preferably in the range of 30 to 100 : 0 to 70 (% by mol), more preferably 50 to 100:0 to 50 (% by mol).

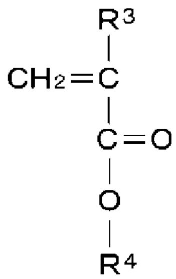

・・・(4)

In the above formula, $R^3$ and $R^4$ have the same meanings as $R^3$ and $R^4$ in the general formula (3).

$R^4$ in the monomer (b) represented by the above general formula (4) has a group having the same size (group having large steric hindrance) as the group represented by $R^2$ in the monomer (a) represented by the aforesaid general formula (2), but differently from $R^2$, this $R^4$ is a group having none of a functional group having hydrogen bond property, an alkoxy group and an aryloxy group. Examples of the monomers (b) include tert-butyl (meth)acrylate, cyclohexyl (meth)acrylate, isobornyl (meth)acrylate, dicyclopentanyl (meth)acrylate and adamantyl (meth)acrylate. Of these, preferable are (meth)acrylic acid esters, such as tert-butyl (meth)acrylate, cyclohexyl (meth)acrylate and isobornyl (meth)acrylate. These monomers (b) can be used singly or as a mixture of two or more kinds.

1.1.4. Another constituent unit

The (meth)acrylic (co)polymer may further have another constituent unit (C). The proportion of another constituent unit (C) in the (meth)acrylic (co)polymer is, for example, 0 to 30% by mol, preferably 0 to 20% by mol.

In order to obtain the constituent unit (C), for example, a monomer component further containing a monomer (c) other than the monomer (a) and the monomer (b) is used to produce the (meth) acrylic (co)polymer. Examples of the monomers (c) include methyl (meth)acrylate, ethyl (meth)acrylate, isobutyl (meth)acrylate, n-butyl (meth)acrylate, lauryl (meth)acrylate, styryl (meth) acrylate, styrene, a vinyl compound, (meth)acrylic acid, maleic anhydride, 2-methacryloyloxyethylsuccininc acid, 2-(meth)acryloyloxyethylphthalic acid, acetoacetoxy (meth)acrylate, N,N-dimethylaminoethyl (meth)acrylate, N,N-diethylaminoethyl (meth)acrylate, (meth)acrylamide, 2-(meth)acryloyloxyethyl acid phosphate, 2-(meth)acrylamido-2-methylpropanesulfonic acid, and (meth)acrylic acid esters, e.g., hydroxyl group-containing (meth)acrylic acid esters, such as 2-hydroxyethyl methacrylate, 2-hydroxy-n-propyl (meth)acrylate, 3-hydroxy-n-propyl (meth)acrylate, 3-hydroxybutyl (meth)acrylate, 4-hydroxybutyl (meth)acrylate, 3-methyl-3-hydroxybutyl (meth)acrylate, 1,1-dimethyl-3-hydroxybutyl (meth)acrylate, 1,3-dimethyl-3-hydroxybutyl (meth)acrylate, 2-ethyl-3-hydroxyhexyl (meth)acrylate, polyethylene glycol mono (meth) acrylate and polypropylene glycol mono (meth) acrylate. Of these, preferable are (meth)acrylic acid, acetoacetoxy (meth)acrylate, N,N-dimethylaminoethyl (meth)acrylate, 2-hydroxyethyl (meth) acrylate, etc. These monomers (c) can be used singly or as a mixture of two or more kinds. The proportion of the monomer (c) in the total amount of the monomer component is, for example, 0 to 30% by mol (preferably 0 to 20%

by mol).

1.1.5. Content

The content of the (meth)acrylic (co)polymer is preferably 1 to 20%, more preferably 5 to 10%, of the total amount of the paste composition according to the present embodiment, from the viewpoint that appropriate viscosity, good coating property and good calcining property are ensured.

1.1.6. SP value

The SP value of the (meth)acrylic (co)polymer is preferably 7 to 10, more preferably 8 to 10, from the viewpoint that the (co) polymer has appropriate viscosity. The SP value of the (meth)acrylic (co)polymer is an indication of polarity of the (co)polymer and is a measure to confirm solubility in a solvent used in the preparation of a paste. In the present invention, the SP value of the (meth) acrylic (co)polymer and the SP value of the later-described solvent can be calculated from a constant of $\Delta F$ of Okitsu (Toshinao Okitsu, "Adhesion", Vol. 40, No. 8, P. 342 (1996)).

1.1.7. Molecular weight

From the viewpoint that good coating property is ensured, the weight-average molecular weight of the (meth) acrylic (co) polymer is preferably 1,000 to 200,000, more preferably 10,000 to 100,000. If the weight-average molecular weight of the (meth) acrylic (co) polymer is less than 1,000, a desired paste viscosity is not obtained. On the other hand, if the weight-average molecular weight of the (meth)acrylic (co)polymer exceeds 200,000, stringing property is increased, and sufficient coating property is not obtained. In the present invention, as a method to measure a molecular weight, a method described in the later-described working examples is used.

1.1.8 Production of (meth)acrylic (co)polymer

The polymerization process for the (meth)acrylic polymer is not specifically restricted, but it is preferable to usually use solution polymerization. The solution polymerization is carried out by introducing prescribed organic solvent, monomer and polymerization initiator into a polymerization tank and subjecting them to thermal reaction in a stream of nitrogen at an appropriate temperature for several hours with stirring. In this case, at least a part of the organic solvent, the monomer, the polymerization initiator and/or a chain transfer agent may be successively added.

Examples of the organic solvents for polymerization include aromatic hydrocarbons, such as benzene, toluene, ethylbenzene, n-propylbenzene, t-butylbenzene, o-xylene, m-xylene, p-xylene, tetralin, decalin and aromatic naphtha; aliphatic or alicyclic hydrocarbons, such as n-hexane, n-heptane, n-octane, i-octane, n-decane, dipentene, petroleum spirit, petroleum naphtha and turpentine oil; esters, such as alkyl acetate (here, alkyl is, for example, methyl, ethyl, propyl, butyl or amyl; the same shall apply hereinafter) and methyl benzoate; derivatives of ethylene glycol, such as monoacetate, diacetate, alkyl ether acetate, (e.g., diethylene glycol monobutyl ether acetate), monoalkyl ether and dialkyl ether of ethylene glycol or diethylene glycol; propylene glycol derivatives, such as monoacetate, diacetate, alkyl ether acetate, monoakyl ether (e.g., tripropylene glycol monobutyl ether) or dialkyl ether of any one glycol of propylene glycol, dipropylene ethylene glycol and tripropylene glycol; ketones, such as acetone, methyl ethyl ketone, methyl i-butyl ketone, isophorone, cyclohexanone and methylcyclohexanone; and texanol (2,2,4-trimethylpentane-1,3-diol monoisobutyrate). These organic solvents can be used singly or as a mixture of two or more kinds. As the organic solvent for polymerization, a solvent having a high boiling point is preferable, and specifically, a solvent having a boiling point of 50 to 300°C is preferable.

Examples of the polymerization initiators include organic peroxides, such as benzoyl peroxide, lauroyl peroxide, caproyl peroxide, di-t-butyl peroxide, di-i-propyl peroxydicarbonate, di-2-ethylhexyl peroxydicarbonate, t-butyl peroxypivalate; and azo compounds, such as 2,2’-azobis-i-butyronitile, 2,2’-azobis-2,4-dimethylvaleronitrile and 2,2’-azobis-4-methoxy-2,4-dimethylvaleronitrile. These polymerization initiators can be used singly or in combination.

The amount of the polymerization initiator used is generally in the range of about 0.01 to 5 parts by mass, preferably about 0.02 to 2 parts by mass, based on 100 parts by mass of the total amount of the monomers.

The polymerization temperature is preferably 40 to 180°C. If the polymerization temperature is lower than 40°C, there is a fear that a sufficient reaction rate will not be obtained. If the polymerization temperature exceeds 180°C, there is a fear of occurrence of depolymerization. When an unreacted monomer is contained in the polymerization product obtained by solution polymerization or the like, it is possible to purify the polymerization product by a reprecipiation method using methanol or the like in order to remove the monomer.

1.2. Other components

The paste composition according to the present embodiment can further contain a solvent, and inorganic powder or a dispersing agent, in addition to the (meth)acrylic (co)polymer.

1.2.1. Solvent

As the solvent employable in the paste composition according to the present embodiment, an organic solvent can be mentioned, and for example, a solvent satisfying a relationship of the following formula (5) with the (meth)acrylic (co)polymer is preferable. By the use of a solvent satisfying a relationship of the following formula (5) with the (meth)acrylic (co)polymer, compatibility of the (meth)acrylic (co)polymer with the solvent is enhanced, and the stability of the paste composition produced is increased.

$$|(\text{SP value of the (meth)acrylic (co)polymer}) - (\text{SP value of the solvent})| \leq 2 \qquad (5)$$

The content of the solvent in the paste composition according to the present embodiment is preferably 10 to 60%, more preferably 30 to 50%, of the total amount of the paste composition according to the present embodiment.

As the solvent employable in the paste composition according to the present embodiment, preferable is a solvent that does not become a residue in the calcining process. Examples of preferred solvents include organic solvents, such as terpineol, dihydroterpineol, dihydroterpineol acetate, butyl carbitol acetate, dipropylene glycol, dipropylene glycol monomethyl ether, butyl carbitol, diethylene glycol alkyl ether acetate (here, alkyl is, for example, n-butyl, propyl or ethyl; the same shall apply hereinafter), ethylene glycol alkyl ether acetate, ethylene glycol diacetate, diethylene glycol alkyl ether, ethylene glycol alkyl ether, dipropylene glycol alkyl ether, propylene glycol alkyl ether acetate, 2,2,4-trimethylpentane-1,3-diol monoisobutyrate, 2,2,4-trimethylpentane-1,3-diol diisobutyrate and 2,2,4-trimethylpentane-1,3-diol diisobutyrate. These solvents can be used singly or as a mixture of two or more kinds. A particularly preferred solvent is a mixed organic solvent using two or more kinds of the above solvents in combination. The organic solvent in the present invention may contain a component other than the above ether compounds, within limits not detrimental to the object of the present invention.

The boiling point of the solvent is preferably 150 to 300°C, more preferably 220 to 280°C. If the boiling point is lower than 150°C, there is a fear that the drying rate of the paste after screen printing may be increased. On the other hand, if the boiling point exceeds 300°C, the drying rate is decreased. In either case, workability is liable to be lowered.

1.2.2. Inorganic powder or dispersing agent

Examples of the inorganic powders employable in the paste composition according to the present embodiment include metal powders, metal oxide powders, glass powders, pigment powders, fluorescent substance powders and ceramic powders. These inorganic powders can be each used singly or as a mixture of two or more kinds.

Examples of the metal powders include powders made of nickel, palladium, platinum, gold, silver, copper, iron, aluminum, tungsten and alloys of these metals.

Examples of the metal oxide powders include powders of ITO, antimony-doped tin oxide (ATO) and fluorine-doped tin oxide (FTO).

Examples of the glass powders include powders of bismuth oxide glass, silicate glass, lead glass, zinc glass and boron glass, and glass powders of various silicon oxides.

Examples of the ceramic powders include powders of alumina, zirconia, titanium oxide, barium titanate, alumina nitride, silicon nitride and boron nitride.

Examples of the dispersing agents employable in the paste composition according to the present embodiment include cationic dispersing agents, anionic dispersing agents, nonionic dispersing agents, amphoteric surface active agents andpolymer-baseddispersing agents. These dispersing agents can be each used singly or as a mixture of two or more kinds.

Examples of the cationic dispersing agents include polyamine-based dispersing agents.

Examples of the anionic dispersing agents include carboxylic acid-based, phosphoric acid ester-based, sulfuric acid ester-based, and sulfonic acid ester-based dispersing agents.

Examples of the nonionic dispersing agents include polyethylene glycol-based dispersing agents.

Examples of the amphoteric surface active agents include surface active agents having carboxylic acids and quaternary ammonium salts.

Examples of the polymer-based dispersing agents include poly(vinylpyrrolidone) and poly(vinyl alcohol).

The content of the inorganic powder in the paste composition according to the present embodiment is preferably 20 to 70% by weight, more preferably 40 to 60% by weight, of the total amount of the paste composition according to the present embodiment. The content of the dispersing agent is preferably 0.01 to 5% by weight, more preferably 0.1 to 3% by weight, of the total amount of the paste composition according to the present embodiment.

1.2.3. Other components

The paste composition according to the present embodiment may contain hitherto known plasticizer, wetting agent, anti-f oaming agent and others, within limits not detrimental to the object of the present invention, in addition to the aforesaid (meth)acrylic (co)polymer, solvent, inorganic powder and dispersing agent.

1.2.4. Viscosity

By the use of the (meth)acrylic (co)polymer of the present invention, the paste composition according to the present embodiment can ensure appropriate viscosity and good coating property. Specifically, a paste composition obtained by kneading a composition consisting of the (meth) acrylic (co) polymer of the present invention, a nickel filler having a mean particle diameter of 200 nm and dihydroterpineol (blending ratio by weight: 5/100/70) by a revolving/rotating mixer and then further kneading the kneadate by a three-roll mill has a viscosity at 25°C of 0.5 to 30 Pa·s, preferably 3 to 20 Pa·s.

1.3. Uses

The paste composition according to the present embodiment can be used to be applied using, for example, screen printing, die coating, doctor blade printing, roll coating, offset printing, gravure printing, flexographic printing, inkjet printing or dispenser printing. The paste composition is preferably used for screen printing among them.

Examples of specific uses of the paste composition according to the present embodiment include a paste for internal electrode, which is used for production of MLCC, a paste for terminal electrode, a paste for internal electrode, which is used for production of LTCC, a paste for touch panel screen, a dielectric paste used for production of PDP, a barrier material paste, a fluorescent substance paste, a sealing glass paste used for sealing of FED or IC package and a paste for green sheet. For example, the paste composition is preferably used for producing a green sheet of MLCC.

Using the paste composition according to the present embodiment, MLCC can be produced by, for example, the following method. To a ceramic raw material, ethanol and a PVB-based binder are added, and they are mixed and dispersed to prepare a ceramic slurry. Then, the ceramic slurry is formed into a sheet to obtain a ceramic green sheet. On this ceramic green sheet, an internal electrode-forming Ni paste is printed to form an internal electrode pattern (conductive paste layer).

Then, plural ceramic green sheets, on each of which the internal electrode pattern has been formed, are laminated in such a manner that the internal electrode patterns are alternately drawn out on the reverse end sides, whereby an uncalcined laminate is obtained.

Subsequently, this laminate is heat-treated in a $N_2$ atmosphere to obtain a ceramic laminate (multi-layer ceramic element). Both end surfaces of the ceramic laminate obtained after calcining are coated with a Cu paste, and the laminate is calcined in a $N_2$ atmosphere to form a terminal electrode that is electrically connected to the internal electrode, whereby MLCC is obtained.

1.4. Working effect

Since the paste composition according to the present embodiment contains a (meth) acrylic (co) polymer having a functional group having hydrogen bond property and containing 20 to 100% by mol of the constituent unit (A), the paste composition is excellent in both of coating property and calcining property.

On the other hand, if a (meth)acrylic (co)polymer containing less than 20% by mol of the constituent unit (A) or a (meth) acrylic (co)polymer containing no constituent unit (A) is used in a paste composition, intramolecular and intermolecular entanglement in the (meth) acrylic (co) polymer is strong, thixotropic property (viscosity property) is not good, and stringing property is high. As a result, it is difficult for such a paste composition to exhibit desired coating property.

In the meantime, a technique to introduce an alkylene oxide as a functional group into a (meth)acrylic (co)polymer has been proposed, but in this case, the viscosity of the resulting paste is low, so that such a (meth)acrylic (co)polymer is not suitable for a paste composition.

In contrast therewith, since the paste composition according to the present embodiment contains a (meth)acrylic (co)polymer containing 20 to 100% bymol of the constituent unit (A), intermolecular entanglement in the (meth)acrylic

(co)polymer can be reduced, and therefore, thixotropic property (viscosity property) can be enhanced. Hence, the paste composition exhibits appropriate viscosity and has low stringing property, and therefore, coating property can be enhanced. Further, since the paste composition according to the present embodiment contains a (meth) acrylic (co) polymer containing 20 to 100% by mol of the constituent unit (A), this composition is excellent in calcining property.

2. Production process for calcined body

The production process for a calcined body according to another embodiment of the present invention comprises a step of applying the paste composition according to the above embodiment to a base, a step of drying the applied paste composition, and a step of calcining the base including the dried paste composition.

That is to say, in the first place, the paste composition according to the above embodiment is applied to a base by a coating method using, for example, screen printing, die coating, doctor blade printing, roll coating, offset printing, gravure printing, flexographic printing, inkjet printing or dispenser printing, or a casting method for forming a sheet, and then processed into a desired shape. Thereafter, the paste composition is dried, and subsequently, the base including the paste composition is calcined, whereby a sintered body having a desired shape can be obtained. Here, examples of the bases to which the paste composition according to the above embodiment is applied include members of metal, ceramic, plastic, semiconductor, etc. From the viewpoint that the paste composition according to the above embodiment has appropriate viscosity and is excellent in coating property and calcining property, the paste composition can be preferably used for screen printing.

3. Calcined body

The calcined body according to another embodiment of the present invention can be obtained by the production process for a clacined body according to the above embodiment.

4. Examples

The present invention is further described with reference to the following examples, but it should be construed that the present invention is in no way limited to those examples.

4.1 Preparation of (meth)acrylic copolymer

4.1.1. Preparation Example 1 (preparation of polymer 1)

Using a monomer component having constitution shown in Table 1, a polymer 1 which was a (meth)acrylic (co)polymer was prepared by the following process. First, in a flask equipped with a stirring device, a nitrogen gas feed pipe, a thermometer and a reflux condenser tube, 100 parts by weight of methyl ethyl ketone (MEK) were placed, and with introducing nitrogen gas into the flask, stirring was carried out for 30 minutes to purge the flask with nitrogen. Thereafter, the contents of the flask were heated up to 80°C. Subsequently, with maintaining the contents of the flask at 80°C, 100 parts by weight of 2-hydroxyisobutyl methacrylate (2HBMA) were dropwise added over a period of 2 hours. Simultaneously with the beginning of the dropwise addition, 0.4 part by weight of azobisisobutyronitrile (AIBN) was added, and this addition was carried out every one hour and 5 times in total. After 8 hours from the beginning of the dropwise addition, the system was cooled down to room temperature. The resulting polymer solution was dropwise added to 2000 parts by weight of n-hexane (n-Hex) over a period of 30 minutes to form a polymer precipitate. The polymer precipitate was filtered off through a 200-mesh wire cloth and dried at 105°C for 8 hours to prepare a polymer 1. The weight-average molecular weight of the resulting polymer 1 was 50, 000, the proportion of the constituent unit (A) was 100% by mol, and the SP value was 9.3 as a calculated value. In the examples, the proportions of the constituent units (A), (B) and (C) are values calculated from the charge ratio between the monomer (a), the monomer (b) and the monomer (c).

4.1.2. Preparation Example 2 (preparation of polymer 2)

Apolymer 2 was prepared by the same operations as in Preparation Example 1, except that 100 parts by weight of 2HBMAused in Preparation Example 1 were replaced with 30 parts by weight of isobornyl methacrylate (IBXMA), 65 parts by weight of 2HBMA and 5 parts by weight of methacrylic acid (MAA). The weight-average molecular weight of the resulting polymer 2 was 50, 000, the proportion of the constituent unit (A) was 68% by mol, the proportion of the constituent unit (B) was 22% by mol, the proportion of the constituent unit (C) was 10% by mol, and the SP value was 9.1 as a calculated value.

4.1.3. Preparation Example 3 (preparation of polymer 3)

A polymer 3 was prepared by the same operations as in Preparation Example 1, except that 100 parts by weight of 2HBMA of Preparation Example 1 were replaced with 50 parts by weight of cyclohexyl methacrylate (CHMA) and 50 parts by weight of cyclohexanedimethanol monoacrylate (CHDMMA). The weight-average molecular weight of the resulting polymer 3 was 50,000, the proportion of the constituent unit (A) was 46% by mol, the proportion of the constituent unit (B) was 54% by mol, and the SP value was 8.8 as a calculated value.

4.1.4. Preparation Example 4 (preparation of polymer 4)

Apolymer 4 was prepared by the same operations as in Preparation Example 1, except that the amount of AIBN of Preparation Example 1 was changed to 0.1 part by weight from 0.4 part by weight. The weight-average molecular weight of the resulting polymer 4 was 150,000, the proportion of the constituent unit (A) was 100% by mol, and the SP value was 9.3 as a calculated value.

4.1.5. Preparation Example 5 (preparation of polymer 5)

Apolymer 5 was prepared by the same operations as in Preparation Example 1, except that 100 parts by weight of 2HBMA of Preparation Example 1 were replaced with 60 parts by weight of 2HBMA, 30 parts by weight of CHMA and 10 parts by weight of HEMA. The weight-average molecular weight of the resulting polymer 5 was 50, 000, the proportion of the constituent unit (A) was 60% by mol, the proportion of the constituent unit (B) was 28% by mol, the proportion of the constituent unit (C) was 12% by mol, and the SP value was 9.1 as a calculated value.

4.1.6. Preparation Example 6 (preparation of polymer 6)

A polymer 6 was prepared by the same operations as in Preparation Example 1, except that 100 parts by weight of 2HBMA of Preparation Example 1 were replaced with 65 parts by weight of HBMA, 25 parts by weight of isobutyl methacrylate (iBMA) and 10 parts by weight of 2-methacryloyloxyethylhexahydrophthalic acid (manufactured by Kyoeisha Chemical Co., Ltd., Light Ester HO-HH). The weight-average molecular weight of the resulting polymer 6 was 50,000, the proportion of the constituent unit (A) was 72% by mol, the proportion of the constituent unit (C) was 28% by mol, and the SP value was 9.1 as a calculated value.

4.1.7. Preparation Example 7 (preparation of polymer 7)

A polymer 7 was prepared by the same operations as in Preparation Example 1, except that 100 parts by weight of 2HBMA of Preparation Example 1 were replaced with 60 parts by weight of 4-methacryloyloxy-2,2,6,6-tetramethypiperidine (manufactured by Hitachi Chemical Co., Ltd., FA-712HM), 20 parts by weight of CHMA and 20 parts by weight of HEMA. The weight-average molecular weight of the resultingpolymer 7 was 50, 000, the proportion of the constituent unit (A) was 49% by mol, the proportion of the constituent unit (B) was 22% by mol, the proportion of the constituent unit (C) was 29% by mol, and the SP value was 9.3 as a calculated value.

4.1.8. Preparation Example 8 (preparation of polymer 8)

Apolymer 7 was prepared by the same operations as in Preparation Example 1, except that 100 parts by weight of 2HBMA of Preparation Example 1 were replaced with 60 parts by weight of 2,2-dimethyl-3-hydroxypropyl methacrylate (DMHPMA), 20 parts by weight of CHMA and 20 parts by weight of HEMA. The weight-average molecular weight of the resulting polymer 8 was 50, 000, the proportion of the constituent unit (A) was 56% by mol, the proportion of the constituent unit (B) was 19% by mol, the proportion of the constituent unit (C) was 25% by mol, and the SP value was 9.4 as a calculated value.

4.1.9. Preparation Example 9 (preparation of polymer 9)

Apolymer 9 was prepared by the same operations as in Preparation Example 1, except that 100 parts by weight of 2HBMA of Preparation Example 1 were replaced with 60 parts by weight of methacrylic acid [(3, 4-epoxycylohexan)-1-yl]methyl (ECMA), 20 parts by weight of CHMA and 20 parts by weight of HEMA. The weight-average molecular weight of the resultingpolymer 9 was 50, 000, the proportion of the constituent unit (A) was 53% by mol, the proportion of the constituent unit (B) was 21% by mol, the proportion of the constituent unit (C) was 26% by mol, and the SP value was 9.1 as a calculated value.

4.1.10. Preparation Example 10 (preparation of polymer 10)

In a flask equipped with a stirring device, a nitrogen gas feed pipe, a thermometer and a reflux condenser tube, 100 parts by weight of MEK were placed, and with introducing nitrogen gas into the flask, stirring was carried out for 30 minutes to purge the flask with nitrogen. Thereafter, the contents of the flask were heated up to 80°C. Subsequently, with maintaining the contents of the flask at 80°C, 60 parts by weight of 2HBMA, 31 parts by weight of IBXMA and 6 parts by weight of dicyclopentenyl acrylate (manufactured by Hitachi Chemical Co., Ltd., FA-511AS) were dropwise added over a period of 2 hours. Simultaneously with the beginning of the dropwise addition, 0.4 part by weight of AIBN was added, and this addition was carried out every one hour and 5 times in total. After 8 hours from the beginning of the dropwise addition, 3 parts by weight of maleic anhydride and 0.2 part by weight of t-butylperoxy-2-ethyl hexanoate (manufactured by NOF Corporation, Perbutyl O) were added. After another 8 hours at 80°C, the system was cooled down to room temperature. The resulting polymer solution was dropwise added to 2000 parts by weight of n-Hex over a period of 30 minutes to form a polymer precipitate. The polymer precipitate was filtered off through a 200-mesh wire cloth and dried at 105°C for 8 hours to prepare a polymer 10. The weight-average molecular weight of the resultingpolymer 10 was 50, 000, the proportion of the constituent unit (A) was 74% by mol, the proportion of the constituent unit (B) was 26% by mol, and the SP value was 8.5 as a calculated value.

4.1.11. Preparation Example 11 (preparation of polymer 11)

Ethyl cellulose (manufactured by Nisshin & Co., Ltd., Ethocel Grade 45 (trade name)) was used as a polymer 11.

4.1.12. Preparation Example 12 (preparation of polymer 12)

Poly (vinyl butyral) (manufacturedby Sekisui Chemical Co., Ltd., S-LEC BH-3) was used as a polymer 12.

4.1.13. Preparation Example 13 (preparation of polymer 13)

Apolymer 13 was prepared by the same operations as in Preparation Example 1, except that 100 parts by weight of 2HBMA of Preparation Example 1 were replaced with 70 parts by weight of iBMA and 30 parts by weight of HEMA. The weight-average molecular weight of the resulting polymer 13 was 50,000, the proportion of the constituent unit (C) was 100% by mol, and the SP value was 9.3 as a calculated value.

4.1.14. Preparation Example 14 (preparation of polymer 14)

Apolymer 14 was prepared by the same operations as in Preparation Example 1, except that 100 parts by weight of 2HBMA of Preparation Example 1 were replaced with 90 parts by weight of iBMA and 10 parts by weight of MAA. The weight-average molecular weight of the resulting polymer 14 was 50,000, the proportion of the constituent unit (C) was 100% by mol, and the SP value was 9.1 as a calculated value.

4.1.15. Preparation Example 15 (preparation of polymer 15)

Apolymer 15 was prepared by the same operations as in Preparation Example 1, except that 100 parts by weight of 2HBMA of Preparation Example 1 were replaced with 60 parts by weight of tert-butyl methacrylate (tBMA) and 40 parts by weight of HEMA. The weight-average molecular weight of the resultingpolymer 15 was 50, 000, the proportion of the constituent unit (B) was 58% by mol, the proportion of the constituent unit (C) was 42% by mol, and the SP value was 9.2 as a calculated value.

4.1.16. Preparation Example 16 (preparation of polymer 16)

Apolymer 16 was prepared by the same operations as in Preparation Example 1, except that 100 parts by weight of 2HBMA of Preparation Example 1 were replaced with 70 parts by weight of CHMA and 30 parts by weight of HEMA. The weight-average molecular weight of the resulting polymer 16 was 50,000, the proportion of the constituent unit (B) was 64% by mol, the proportion of the constituent unit (C) was 36% by mol, and the SP value was 9.1 as a calculated value.
Constitutions of the polymers are set forth in Table 1.

[Table 1]

| Polymer | | | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|---|
| Monomer component (wt%) | Monomer (a) | 2HBMA | 100 | 65 | | 100 | 60 | 65 | | | | 60 | | | | | | |
| | | CHDMMA | | | 50 | | | | | | | | | | | | | |
| | | HO-HH | | | | | | 10 | | | | | | | | | | |
| | | FA-712HM | | | | | | | 60 | | | | | | | | | |
| | | DMHPMA | | | | | | | | 60 | | | | | | | | |
| | | ECMA | | | | | | | | | 60 | | | | | | | |
| | | Reaction product of FA-511AS with maleic anhydride | | | | | | | | | | 9 | | | | | | |
| | Monomer (b) | CHMA | | | 50 | | 30 | | 20 | 20 | 20 | | | | | | | 70 |
| | | tBMA | | | | | | | | | | | | | | | 60 | |
| | | IBXMA | | 30 | | | | | | | | 31 | | | | | | |
| | Monomer (c) | HEMA | | | | | 10 | | 20 | 20 | 20 | | | | 30 | | 40 | 30 |
| | | MAA | | 5 | | | | | | | | | | | | 10 | | |
| | | iBMA | | | | | | 25 | | | | | | | 70 | 90 | | |
| Ethyl cellulose | | | | | | | | | | | | | 100 | | | | | |
| Poly(vinyl butyral) | | | | | | | | | | | | | | 100 | | | | |

In Table 1 and Table 2, the abbreviations represent the following monomers.

2HBMA: 2-hydroxyisobutyl methacrylate
CHDMMA: cyclohexanedimethanol monoacrylate
HO-HH: 2-methacryloyloxyethylhexahydrophthalic acid FA-712HM: 4-methacryloyloxy-2,2,6,6-tetramethylpiperidine DMHPMA: 2,2-dimethyl-3-hydroxypropyl methacrylate
ECMA: methacylic acid [(3,4-epoxycyclohexan)-1-yl]methyl
FA-511AS: dicyclopentenyl acrylate
CHMA: cyclohexyl methacrylate
tBMA: tert-butyl methacrylate
IBXMA: isobornyl methacrylate
HEMA: 2-hydroxyethyl methacrylate
MAA: methacrylic acid
iBMA: isobutyl methacrylate

X, Y and a volume of R ($R^2$ of monomer (a), $R^4$ of monomer (b), etc.) of COOR group derived from (meth)acrylic acid to constitute a monomer used in each of Preparation Examples 1 to 16, said X, Y and volume having been calculated by the EF method of MOPAC PM3, are set forth in Table 2.

[Table 2]

| Type of monomer | 2HBMA | CHDMMA | HO-HH | FA712HM | DMHPMA |
|---|---|---|---|---|---|
| R of COOR group of monomer | 2-hydroxyisobutyl | cyclohexyldimethanol | ethylhexahydrophthalic acid | tetramethylpiperidyl | 2,2-dimethyl-3-hydroxypropyl |
| X of R (Å) | 6.746 | 10.044 | 11.248 | 8.586 | 7.511 |
| Y of R (Å) | 6.165 | 6.821 | 9.74 | 6.728 | 6.567 |
| Ratio of x to Y (X/Y) | 1.09 | 1.47 | 1.15 | 1.28 | 1.14 |
| Volume of R ($Å^3$) | 86.97 | 142.98 | 189.866 | 147.668 | 103.48 |

[Table 2]
(continued)

| Type of monomer | ECMA | FA-511AS | CHMA | t-BMA | IBXMA | 2HEMA | MAA | i-BMA |
|---|---|---|---|---|---|---|---|---|
| R of COOR group of monomer | 3,4-epoxycyclohexyl | dicyclopentenyl | cyclohexyl | tert-butyl | isobornyl | 2-hydroxyethyl | H | isobutyl |
| X of R (Å) | 7.534 | 9.18 | 7.385 | 6.514 | 7.81 | 5.995 | 0.529* | 6.719 |
| Y of R (Å) | 7.117 | 7.363 | 6.731 | 6.513 | 7.629 | 4.774 | 0.529* | 6.14 |
| Ratio of x to Y (X/Y) | 1.06 | 1.25 | 1.1 | 1 | 1.02 | 1.26 | | 1.09 |
| Volume of R ($Å^3$) | 102.724 | 145.845 | 101.168 | 95.052 | 157.56 | 53.481 | | 78.535 |

*: Value of Bohr radius

4.2. Preparation of paste composition

A composition consisting of any one of the polymers 1 to 16 prepared above, a Ni filler (mean particle diameter: 200 nm) and terpineol (SP value: 9.2) (blending ratio: 8/100/70) was kneaded by a revolving/rotating mixer (trade name: "Awatori Rentaro", manufactured by THINKY Corporation) and then further kneaded by a three-roll mill to obtain a paste composition.

4.3. Evaluation methods

4.3.1. SP value

SP value was calculated from a constant of ΔF of Okitsu (Toshinao Okitsu, "Adhesion", Vol. 40, No. 8, P. 342 (1996)).

4.3.2. Molecular weight

Analysis by gel permeation chromatography was carried out, and a weight-average molecular weight in terms of polystyrene was calculated as a molecular weight.

Apparatus: GPC-8220 (manufactured by Tosoh Corporation)
Column: one of G7000HXL/7.8 mmID + two of GMHXL/7.8 mmID + one of G2500HXL/7.8 mmID

Solvent: tetrahydrofuran (abbreviation: THF)
Flow rate: 1.0 mL/min
Concentration: 1.5 mg/ml
Injection quantity: 300 μL
Column temperature: 40°C

4.3.3. Printability

The paste composition was applied to a glass plate by screen coating under the conditions of 640 meshes, a gap of 0.1 mm and a rate of 30 cm/sec and dried, and surface roughness (Ra) was measured by a surface roughness meter. Using the resulting surface roughness value as an indication, printability was evaluated in accordance with the following criteria.

◎: Ra is not more than 0.15.
○: Ra is more than 0.15 but not more than 0.2.
Δ: Ra is more than 0.2 but not more than 0.25.
×: Ra is more than 0.25.

4.3.4. Viscosity

Viscosity of the paste composition was measured by an E type viscometer at 25°C, and the viscosity was evaluated in accordance with the following criteria.

◎: Viscosity is more than 3 Pa·s but not more than 20 Pa·s.
○: Viscosity is more than 1.5 Pa·s but not more than 3 Pa·s.
Δ: Viscosity is not less than 0.5 Pa·s but not more than 1.5 Pa·s.
×: Viscosity is less than 0.5.

4.3.5. Dispersing stability

Whether phase separation of the paste composition having been prepared occurred or not was visually evaluated, and dispersing stability was evaluated in accordance with the following criteria.

○: Separation of the paste composition did not occur for not less than 3 days.
Δ: Separation of the paste composition occurred within 1 to 3 days.
×: Separation of the paste composition occurred within 1 day.

4.3.6. Calcining property

After calcining (TG-DTA) was carried out in a nitrogen atmosphere at 700°C for 1 hour, presence or absence of residual carbon was visually confirmed, and calcining property of the polymer was evaluated in accordance with the following criteria.

○: There is no residual carbon.
Δ: There is a slight amount of residual carbon.
×: There is a non-negligible amount of residual carbon.

4.4. Evaluation results

The evaluation results are set forth in Table 3.

[Table 3]

| Sample | Type of polymer | Proportion of constituent unit (A) in (meth)acrylic (co)polymer (mol%) | Proportion of constituent unit (A) + constituent unit (B)(mol%) | SP value of (meth)acrylic copolymer | Molecular weight | Printability | Viscosity | Dispersing stability | Calcining property |
|---|---|---|---|---|---|---|---|---|---|
| Ex. 1 | polymer 1 | 100 | 100 | 9.3 | 50,000 | ◎ | ○ | Δ | ○ |
| Ex. 2 | polymer 2 | 68 | 90 | 9.1 | 50,000 | ○ | ○ | Δ | ○ |
| Ex. 3 | polymer 3 | 46 | 100 | 8.8 | 50,000 | ○ | ○ | ○ | Δ |
| Ex. 4 | polymer 4 | 100 | 100 | 9.3 | 150,000 | ○ | ◎ | ○ | ○ |
| Ex. 5 | polymer 5 | 60 | 88 | 9.1 | 50,000 | ◎ | ○ | ○ | ○ |
| Ex. 6 | polymer 6 | 72 | 72 | 9.1 | 50,000 | ○ | ○ | Δ | ○ |
| Ex. 7 | polymer 7 | 49 | 71 | 9.3 | 50,000 | ○ | ○ | ○ | ○ |
| Ex. 8 | polymer 8 | 56 | 75 | 9.4 | 50,000 | ○ | ○ | Δ | ○ |
| Ex. 9 | polymer 9 | 53 | 74 | 9.1 | 50,000 | ○ | ○ | ○ | ○ |
| Ex. 10 | polymer 10 | 74 | 100 | 8.5 | 50,000 | ◎ | ○ | Δ | ○ |
| Comp. Ex. 1 | polymer 11 | EC | | 8.8 | 100,000 | ○ | ◎ | ○ | × |
| Comp. Ex. 2 | polymer 12 | PVB | | 8.8 | 100,000 | ○ | ◎ | ○ | × |
| Comp. Ex. 3 | polymer 13 | 0 | 0 | 9.3 | 50,000 | × | × | Δ | ○ |
| Comp. Ex. 4 | polymer 14 | 0 | 0 | 9.1 | 50,000 | × | × | × | ○ |

(continued)

| Sample | Type of polymer | Proportion of constituent unit (A) in (meth)acrylic (co)polymer (mol%) | Proportion of constituent unit (A) + constituent unit (B)(mol%) | SP value of (meth)acrylic copolymer | Molecular weight | Printability | Viscosity | Dispersing stability | Calcining property |
|---|---|---|---|---|---|---|---|---|---|
| Comp. Ex. 5 | polymer 15 | 0 | 58 | 9.2 | 50,000 | × | Δ | Δ | ○ |
| Comp. Ex. 6 | polymer 16 | 0 | 64 | 9.1 | 50,000 | Δ | × | Δ | ○ |

According to Table 3, it can be understood that since the paste compositions of Examples 1 to 10 each contained a (meht)acrylic (co)polymer containing 20 to 100% by mol (more specifically 70 to 100% by mol) of the constituent unit (A) represented by the aforesaid general formula (1), they have appropriate viscosity and good dispersing stability, and therefore, they are excellent in coating property and are also excellent in calcining property and printability. In particular, it can be understood that the paste compositions of Examples 1 to 10 are excellent in calcining property as compared with the case where ethyl cellulose or poly (vinyl butyral) was used instead of the (meth)acrylic (co)polymer (Comparative Examples 1 and 2).

It can be understood that in contrast with the above, in the paste compositions of Comparative Examples 3 to 6, the proportion of the constituent unit (A) in the (meth) acrylic (co)polymer was less than 70% by mol (more specifically, less than 20% by mol), and therefore, those compositions are poor in printability. That is to say, in the paste compositions of Comparative Examples 3 to 6, the proportion of the constituent unit (A) is low, and therefore, desired paste viscosity is not exhibited, and besides, interaction between an ester group derived from acrylic and other molecules tends to occur. As a result, intermolecular entanglement is strengthened, and therefore, stringing property is deteriorated, and printability is deteriorated.

## Claims

1. A paste composition comprising a (meth)acrylic (co)polymer containing 20 to 100% by mol of a constituent unit (A) represented by the following general formula (1):

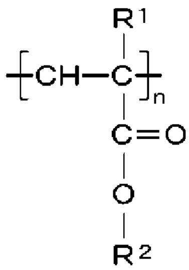

・・・(1)

wherein $R^1$ is a hydrogen atom or a methyl group, $R^2$ is a group having diameters of X<13.5 Å and Y>6.15 Å (here, X represents a length in the long-side direction and Y represents a length in the short-side direction) and having a volume larger than 80 $Å^3$ and is a functional group having hydrogen bond property, a group having an alkoxy group or a group having an aryloxy group, and n is a number of 5 to 2000.

2. The paste composition as claimed in claim 1, wherein the (meth)acrylic (co)polymer is a (co)polymer of a monomer component containing 20 to 100% by mol of a amonomer (a) represented by the following general formula (2):

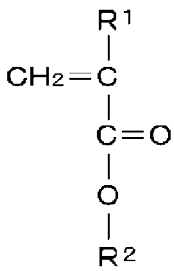

・・・(2)

wherein $R^1$ and $R^2$ have the same meanings as $R^1$ and $R^2$ in the general formula (1).

3. The paste composition as claimed in claim 1, wherein the (meth)acrylic copolymer further contains a constituent

unit (B) represented by the following general formula (3):

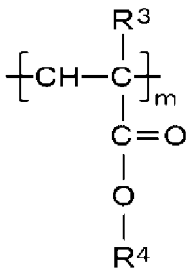

・・・(3)

wherein $R^3$ is a hydrogen atom or a methyl group, $R^4$ is a group having diameters of X<13.5 Å and Y>6.15 Å (here, X represents a length in the long-side direction and Y represents a length in the short-side direction) and having a volume larger than 80 $Å^3$ and is a group having none of a functional group having hydrogen bond property, a group having an alkoxy group and an aryloxy group, and m is a number of 5 to 1500.

**4.** The paste composition as claimed in claim 2, wherein the total amount of the monomer (a) and a monomer (b) represented by the following general formula (4) in the monomer component is 70 to 100% by mol,

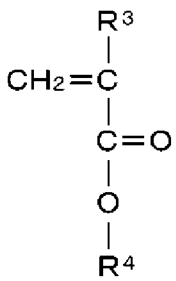

・・・(4)

wherein $R^3$ and $R^4$ have the same meanings as $R^3$ and $R^4$ in the general formula (3).

**5.** The paste composition as claimed in any one of claims 1 to 4, wherein the functional group having hydrogen bond property is at least one group selected from a hydroxyl group, a carboxyl group, an amino group, an amide group, an acetoacetoxy group, an acid anhydride group, a sulfonic acid group, a phosphoric acid group, a thiol group and a heterocyclic group.

**6.** The paste composition as claimed in any one of claims 1 to 5, wherein the SP value of the (meth)acrylic (co)polymer is 7 to 10.

**7.** The paste composition as claimed in any one of claims 1 to 6, wherein the weight-average molecular weight of the (meth)acrylic (co)polymer is 1,000 to 200,000.

**8.** The paste composition as claimed in any one of claims 1 to 7, which further comprises a solvent, and inorganic powder or a dispersing agent.

**9.** The paste composition as claimed in claim 8, wherein the (meth) acrylic (co) polymer and the solvent satisfy a relationship of the following formula (5):

|(SP value of the (meth)acrylic (co)polymer)-(SP value of the solvent)|≤2 (5)

**10.** The paste composition as claimed in any one of claims 1 to 9, which is used for producing a green sheet of a multilayer ceramic condenser.

**11.** A production process for a calcined body, comprising:

a step of applying the paste composition as claimed in any one of claims 1 to 10 to a base,
a step of drying the applied paste composition, and
a step of calcining the base including the dried paste composition.

**12.** A calcined body obtained by the production process for a calcined body as claimed in claim 11.

**INTERNATIONAL SEARCH REPORT**

International application No.
PCT/JP2013/081950

A. CLASSIFICATION OF SUBJECT MATTER
*C08L33/08*(2006.01)i, *C09D1/00*(2006.01)i, *C09D133/04*(2006.01)i, *H01G4/12*(2006.01)i, *H01G4/30*(2006.01)i

According to International Patent Classification (IPC) or to both national classification and IPC

B. FIELDS SEARCHED

Minimum documentation searched (classification system followed by classification symbols)
C08L1/00-101/14, C09D1/00-201/10, H01G4/00-4/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 6-56511 A (Nippon Shokubai Co., Ltd.), 01 March 1994 (01.03.1994), claims 1, 2; paragraphs [0001], [0033], [0038] to [0041] (Family: none) | 1-12 |
| X<br>A | JP 11-337419 A (Matsushita Electric Industrial Co., Ltd.), 10 December 1999 (10.12.1999), claims 1 to 7; paragraphs [0018] to [0023] & US 6524697 B1 & EP 999436 A1 & WO 1999/061874 A1 | 1-9<br>10-12 |
| P,A | WO 2013/157458 A1 (Murata Mfg. Co., Ltd.), 24 October 2013 (24.10.2013), claims 1 to 10; paragraphs [0132] to [0140] (Family: none) | 1-12 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 February, 2014 (13.02.14) | 25 February, 2014 (25.02.14) |
| Name and mailing address of the ISA/<br>Japanese Patent Office<br>Facsimile No. | Authorized officer<br><br>Telephone No. |

Form PCT/ISA/210 (second sheet) (July 2009)

INTERNATIONAL SEARCH REPORT

International application No. PCT/JP2013/081950

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2013-30637 A (Sumitomo Bakelite Co., Ltd.), 07 February 2013 (07.02.2013), claims 1 to 6; paragraphs [0033] to [0039] (Family: none) | 1-12 |
| A | JP 2008-106160 A (Sumitomo Bakelite Co., Ltd.), 08 May 2008 (08.05.2008), claims 1 to 5; paragraphs [0015], [0065], [0074] (Family: none) | 1-12 |
| A | JP 2000-191737 A (Daicel Chemical Industries, Ltd.), 11 July 2000 (11.07.2000), claims 1 to 9; paragraphs [0032] to [0035] & EP 1063247 A1 & WO 2000/040632 A1 | 1-12 |
| A | JP 2002-311583 A (Daicel Chemical Industries, Ltd.), 23 October 2002 (23.10.2002), claims 1 to 7; paragraphs [0038] to [0043] (Family: none) | 1-12 |
| A | JP 11-315145 A (Nippon Paint Co., Ltd.), 16 November 1999 (16.11.1999), claims 1 to 10; paragraphs [0174] to [0192] & GB 2335196 A | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012129181 A


### Non-patent literature cited in the description


- **TOSHINAO OKITSU.** *Adhesion,* 1996, vol. 40 (8), 342